(19) Europäisches Patentamt
European Patent Office
Office européen des brevets

(11) **EP 4 091 922 A1**

(12) **EUROPÄISCHE PATENTANMELDUNG**

(43) Veröffentlichungstag:
**23.11.2022 Patentblatt 2022/47**

(21) Anmeldenummer: **22173566.5**

(22) Anmeldetag: **16.05.2022**

(51) Internationale Patentklassifikation (IPC):
**B62D 49/06** (2006.01)     **F15B 11/028** (2006.01)

(52) Gemeinsame Patentklassifikation (CPC):
**B62D 49/065;** F15B 11/10; F15B 2211/30515;
F15B 2211/327; F15B 2211/365; F15B 2211/50554

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **18.05.2021 DE 102021002610**

(71) Anmelder: **Hydac Mobilhydraulik GmbH
Sulzbach/Saar (DE)**

(72) Erfinder:
• **Kiefer, Timo
66740 Saarlouis (DE)**
• **Kihm, Benjamin
54340 Ensch (DE)**

(74) Vertreter: **Bartels und Partner, Patentanwälte
Lange Strasse 51
70174 Stuttgart (DE)**

(54) **FAHRBARE ARBEITSMASCHINE**

(57)     1. Fahrbare Arbeitsmaschine

2. Es ist eine fahrbare Arbeitsmaschine mit einem Trägerfahrzeug und einer Arbeitsgerätschaft (12), die zumindest besteht aus einem Lenkertrieb (14) mit mindestens einem an einer Lagerstelle (18) schwenkbar gelagerten Lenker (16) und einem fluidisch antreibbaren Stellantrieb (20) zum Ansteuern des jeweiligen Lenkers (16), offenbart, die dadurch gekennzeichnet ist, dass eine Druckregelventilanordnung (22) vorgesehen ist, die zumindest einen Ansteuerfluiddruck ($p_I$, $p_J$) des Stellantriebs (20) derart regelt, dass die Arbeitsgerätschaft (12) hinsichtlich ihrer Bewegung in Relation zu dem Trägerfahrzeug von dem Trägerfahrzeug entkoppelt ist. Zudem ist ein Verfahren zum Regeln einer Position zumindest eines Teils der Arbeitsgerätschaft (12) gegenüber einer Bezugsfläche (70) offenbart.

Fig.1

EP 4 091 922 A1

**Beschreibung**

Die Erfindung betrifft eine fahrbare Arbeitsmaschine mit einem Trägerfahrzeug und einer Arbeitsgerätschaft, die zumindest besteht aus einem Lenkertrieb mit mindestens einem an einer Lagerstelle schwenkbar gelagerten Lenker und einem fluidisch antreibbaren Stellantrieb zum Ansteuern des jeweiligen Lenkers.

Aus der WO 2015/067804 A1 ist in der Art einer fahrbaren Arbeitsmaschine eine Vorrichtung zum Ausbringen von Wirkstoffen bekannt. Die Vorrichtung umfasst ein Trägerfahrzeug, ein schwenkbar angeordnetes Gestänge und einen Aktor als Stellantrieb, der die momentane Drehlage des Gestänges um eine Drehachse beeinflusst. Zudem ist eine Regelungseinrichtung vorgesehen, die den Aktor mittels eines äußeren und eines inneren Regelkreises ansteuert. In dem äußeren Regelkreis wird ein Soll-Drehmoment generiert, anhand dessen der innere Regelkreis ein Ist-Drehmoment regelt, das durch den Aktor in das Gestänge eingeleitet wird. In einem Ausführungsbeispiel des inneren Regelkreises steuert ein Drehmomentregler dieses Regelkreises ein Hydraulikventil an, das den Aktor ansteuert, wobei eine Regelgröße in Form eines Fluiddrucks im Aktor gemessen und ein entsprechendes Ist-Drehmoment ermittelt wird. In Abhängigkeit des Ist-Drehmoments wird die Regelabweichung des Soll-Drehmoments ermittelt, die dem Drehmomentregler des inneren Regelkreises zugeführt wird.

Ändert sich bei einer Störung von außen, beispielsweise ausgelöst durch eine Drehbewegung des Trägerfahrzeuges, der Fluiddruck, gleicht der innere Regelkreis diesen Regelfehler aus und stellt sicher, dass das Soll-Drehmoment in das Gestänge eingeleitet wird. Soll kein Drehmoment eingeleitet werden, erhält der innere Regelkreis vom äußeren Regelkreis den Wert Null als Sollwert. Der innere Regelkreis regelt dann den Ansteuerstrom des Hydraulikventils derart, dass im Sinne einer Entkopplung zwischen Trägerfahrzeug und Gestänge kein Drehmoment eingeleitet wird, auch wenn sich die äußeren Einflüsse ändern, beispielsweise durch eine Bewegung des Trägerfahrzeuges.

Der Erfindung liegt die Aufgabe zugrunde eine fahrbare Arbeitsmaschine bereitzustellen, deren Regelung bei einfachem Aufbau in der Dynamik verbessert ist.

Eine dahingehende Aufgabe löst eine erfindungsgemäße Arbeitsmaschine mit den Merkmalen des Patentanspruchs 1 in seiner Gesamtheit.

Gemäß dem kennzeichnenden Teil des Anspruchs 1 zeichnet sich die erfindungsgemäße Arbeitsmaschine dadurch aus, dass eine Druckregelventilanordnung vorgesehen ist, die zumindest einen Ansteuerfluiddruck des Stellantriebs derart regelt, dass die Arbeitsgerätschaft hinsichtlich ihrer Bewegung in Relation zu dem Trägerfahrzeug von dem Trägerfahrzeug entkoppelt ist.

Im Vergleich zum Stand der Technik ist der für die Entkopplung zwischen dem Trägerfahrzeug und der Arbeitsgerätschaft zuständige Regelkreis erfindungsgemäß rein fluidisch und weniger aufwändig ausgebildet, wodurch dieser im Betrieb eine höhere Dynamik aufweist. So sind die im Stand der Technik in diesem Regelkreis für die Entkopplung vorgesehenen Komponenten in Form des Drehmomentreglers, des Ventils und des Drucksensors sowie die vorgesehenen Schritte in Form der Ermittlung des Ist-Drehmoments aus dem Ist-Druck und die Ermittlung der Regelabweichung hinfällig respektive erfindungsgemäß durch die Druckregelventilanordnung ersetzt, die aufgrund ihrer rein fluidischen Auslegung die genannten Schritte erst gar nicht benötigt. Vorzugsweise ist die Druckregelventilanordnung in der einfachsten Ausführung als ein einziges Druckregelventil ausgebildet, durch das allein die Funktion des gesamten, für die Entkopplung zuständigen Regelkreises des Standes der Technik erfüllt wird.

Außerdem entspricht eine durch die Druckregelventilanordnung, insbesondere durch ein einziges Druckregelventil, verwirklichte Entkopplung einer idealen Federung und ist einfach in eine Bewegungsgleichung einbindbar.

Bei einem bevorzugten Ausführungsbeispiel ist vorgesehen, dass die Druckregelventilanordnung zumindest ein Druckregelventil zur Regelung des jeweiligen Ansteuerfluiddrucks aufweist, das jeweils mit einem Arbeitsraum des Stellantriebs fluidführend verbunden ist, wobei sich die Arbeitsräume vorzugsweise voneinander unterscheiden. Besonders bevorzugt ist hierbei als Stellantrieb ein doppeltwirkender Arbeitszylinder vorgesehen, an dessen beide Arbeitsräume jeweils ein Druckregelventil angeschlossen ist. Dadurch ist mittels des Arbeitszylinders neben einem aktiven Heben auch ein aktives Senken der Arbeitsgerätschaft ermöglicht, weil bei einem Senkvorgang zusätzlich zu dem wirkenden Eigengewicht der Arbeitsgerätschaft der Kolben des Arbeitszylinders in die entsprechende Senkrichtung beaufschlagt werden kann. Des Weiteren ist dadurch der Kolben des Arbeitszylinders durch die in den beiden Arbeitskammern vorherrschenden Fluiddrücke einspannbar. Bei Vorsehen eines doppeltwirkenden Arbeitszylinders und eines Offset-Fluiddrucks zum Ausgleichen eines Eigengewichts der Arbeitsgerätschaft sind beide Arbeitsräume des Arbeitszylinders gleichermaßen mit einem vom Offset-Fluiddruck abhängigen Fluiddruck zu beaufschlagen.

Bei einem weiteren bevorzugten Ausführungsbeispiel ist vorgesehen, dass das jeweilige Druckregelventil zumindest entgegen einer Kraft des jeweiligen Ansteuerfluiddrucks elektromagnetisch betätigbar ist. Dabei entspricht das Abgreifen des jeweiligen Ansteuerfluiddrucks an dem Anschluss des jeweiligen Druckregelventils, der mit dem jeweiligen Arbeitsraum des Stellantriebs fluidführend verbunden ist, und das Führen dieses Fluiddrucks über eine jeweilige Steuerleitung auf die eine Steuerseite des jeweiligen Ventilkolbens einer Rückführung des durch das jeweilige Druckregelventil gebildeten Regelkreises für die Entkopplung.

Bei einem weiteren bevorzugten Ausführungsbeispiel ist vorgesehen, dass in den jeweiligen Fluidweg zwischen dem jeweiligen Arbeitsraum des Stellantriebs und dem jeweiligen Druckregelventil ein Sperrventil geschaltet ist, das vorzugsweise als 2/2-Wege-Schaltventil ausgebildet ist. Dadurch ist ein Fluidstrom von einem Arbeitsraum des Stellantriebes in Richtung eines Tanks und damit ein Absenken der Arbeitsgerätschaft verhindert, wenn das Sperrventil in seiner Sperrstellung angeordnet ist, die vorzugsweise seiner unbetätigten Stellung entspricht. Besonders bevorzugt ist die Sperrstellung des Schaltventils durch einen Fluidweg gebildet, in den ein Rückschlagventil geschaltet ist, das in Richtung des Arbeitsraums des Stellantriebs öffnet. Dadurch ist ein Beaufschlagen des jeweiligen Arbeitsraums mit Druck oder ein Nachsaugen von Fluid in diesen Arbeitsraum auch dann möglich, wenn das Sperrventil in seiner Sperrstellung angeordnet ist.

Bei einem weiteren bevorzugten Ausführungsbeispiel ist vorgesehen, dass eine Regeleinheit und mit dieser verbunden, eine Eingabeeinrichtung und vorzugsweise mindestens eine Sensoreinrichtung zum Erfassen von Zustandswerten des Lenkertriebes vorgesehen sind, und dass zumindest das jeweilige Druckregelventil von der Regeleinheit ansteuerbar ist. Bevorzugt ist dabei vorgesehen, dass mindestens eine Sensoreinrichtung in Form eines Bewegungssensors, insbesondere Drehraten- oder Beschleunigungssensors, vorgesehen ist, der Bewegungszustandswerte des Lenkertriebes erfasst und der zur Übermittlung dieser Werte an die Regeleinheit angeschlossen ist. Der jeweilige Drehratensensor dient zum Erfassen absoluter Winkelgeschwindigkeitswerte des Lenkers; der jeweilige Beschleunigungssensor zum Erfassen absoluter Beschleunigungswerte des Lenkers. Vorliegend ist der Begriff "absolut" dahingehend zu verstehen, dass die jeweiligen Werte nicht in Relation zu dem sich gegebenenfalls bewegenden Trägerfahrzeug, sondern in Bezug auf das zugrunde liegende Inertialsystem erfasst werden, dem die Erde näherungsweise entspricht. Die jeweilige Sensoreinrichtung kann dazu an dem Lenker angebracht sein.

Besonders bevorzugt ist eine inertiale Messeinheit (Inertial Measurement Unit) vorgesehen, die Sensoreinrichtungen in Form von drei senkrecht zueinander ausgerichteten Drehratensensoren zum Erfassen von absoluten Winkelgeschwindigkeitswerten des Lenkers in drei Freiheitgraden, nämlich x-, y- und z-Richtung und zudem drei senkrecht zueinander ausgerichteten Beschleunigungssensoren zum Erfassen von absoluten Beschleunigungswerten des Lenkers in drei Freiheitgraden, nämlich x-, y- und z-Richtung aufweist. Die inertiale Messeinheit kann dafür an dem Lenker angebracht sein. Als inertiale Messeinheit kann das Produkt "HIT 1500" der Schutzrechtsinhaberin dienen.

Die inertiale Messeinheit bzw. jede Sensoreinrichtung kann an die Regeleinheit angeschlossen sein, von der zumindest das jeweilige Druckregelventil ansteuerbar ist. Durch diesen Regelkreis ist eine ideale Dämpfung der Bewegung der Arbeitsgerätschaft realisierbar, wodurch eine Stabilisierung der Arbeitsgerätschaft gegeben ist. Zudem ist ein Dynamikverlust und/oder eine Signalverfälschung, wie beispielsweise aufgrund einer Filterung, verhindert. Besonders bevorzugt ist weiterhin vorgesehen, dass eine weitere Sensoreinrichtung in Form eines Positionssensors, insbesondere Abstands- oder Neigungssensors, vorgesehen ist, der Positionswerte des Lenkertriebes erfasst und der zur Übermittlung dieser Werte an die Regeleinheit angeschlossen ist. Durch diesen Regelkreis ist eine Positionierung der Arbeitsgerätschaft in Relation zu einer Bezugsfläche verwirklichbar, die vorzugsweise dem Boden entspricht.

Bei einem weiteren bevorzugten Ausführungsbeispiel ist vorgesehen, dass das eingesetzte Fluid Hydraulikfluid, insbesondere Hydrauliköl ist, so dass sämtliche Komponenten der Druckregelventilanordnung sowie der Stellantrieb ebenfalls hydraulisch ausgebildet sind.

Die Gesamtregelung zeichnet sich durch eine gesteigerte Arbeitsgenauigkeit und -geschwindigkeit aus. Zudem ist eine einfache Ventiltechnik gegeben, weil eine Ventilanordnung, insbesondere ein Ventil, für unterschiedliche Anforderungen, wie beispielsweise das Positionieren und das Entkoppeln der Arbeitsgerätschaft, eingesetzt wird.

Des Weiteren ist Gegenstand der Erfindung ein Verfahren zum Regeln einer Position zumindest eines Teils der Arbeitsgerätschaft der voranstehend genannten fahrbaren Arbeitsmaschine gegenüber einer Bezugsfläche, mit folgenden Schritten: Vorgeben einer Soll-Position der Arbeitsgerätschaft und Ermitteln eines Fluiddrucks in Abhängigkeit der Soll-Position; und Regeln zumindest eines Ansteuerfluiddrucks des Stellantriebs mittels einer Druckregelventilanordnung zumindest in Abhängigkeit des ermittelten Fluiddrucks derart, dass die Arbeitsgerätschaft hinsichtlich ihrer Bewegung in Relation zu dem Trägerfahrzeug von dem Trägerfahrzeug entkoppelt ist.

Bei einem bevorzugten Ausführungsbeispiel ist vorgesehen, dass zur Ansteuerung des Druckregelventils von der Regeleinheit mittels einer Umsetzungstabelle Werte der Regelabweichung in Ansteuersignalwerte umgesetzt werden, mittels denen das jeweilige Druckregelventil von der Regeleinheit angesteuert wird. Dadurch sind die Ansteuersignalwerte aus den Regelabweichungswerten besonders einfach und schnell erhaltbar.

Bei einem weiteren bevorzugten Ausführungsbeispiel ist vorgesehen, dass mittels mindestens einer Sensoreinrichtung Zustandswerte des Lenkertriebes erfasst werden und dass die Regelabweichung von der Regeleinheit zumindest in Abhängigkeit der Zustandswerte ermittelt wird. Bevorzugt ist dabei vorgesehen, dass mittels einer Sensoreinrichtung in Form eines Bewegungssensors, insbesondere Drehraten- oder Beschleunigungssensors, Bewegungszustandswerte des Lenkertriebes erfasst werden und dass die Regelabweichung von der Regeleinheit zumindest in Abhängigkeit der Bewegungszustandswerte ermittelt wird. Besonders bevorzugt ist dabei vorgesehen, dass mittels einer weiteren Sensoreinrichtung in Form eines Positionssensors, insbesondere Abstands- oder Neigungssensors, Positionswerte des Lenkertriebes ermittelt werden und dass die Regelabweichung von der Regeleinheit zumindest in Abhängigkeit der Positionswerte ermittelt wird.

Im Folgenden wird eine erfindungsgemäße Arbeitsmaschine anhand der Zeichnung näher erläutert. Dabei zeigen die

Fig. 1 und 2 in nicht maßstäblicher und schematischer Darstellung einen Teil einer Arbeitsgerätschaft mit einem Lenkertrieb, der als Schwinge bzw. Viergelenkkette ausgebildet ist und der von einer Druckregelventilanordnung ansteuerbar ist, dargestellt in der Art eines hydraulischen Schaltplans; und

Fig. 3 in einer schematischen Blockdarstellung einen prinzipiellen Ablauf der Regelung der Druckregelventilanordnung aus Fig. 2.

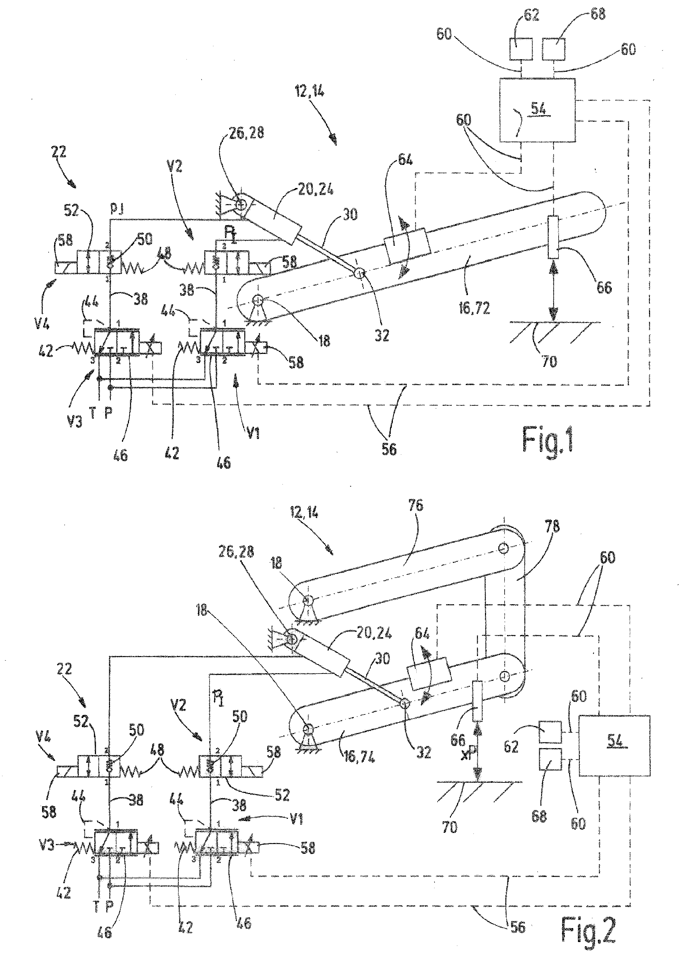

Es ist eine Arbeitsmaschine mit einem Trägerfahrzeug und einer Arbeitsgerätschaft 12 vorgesehen. Von der Arbeitsmaschine ist in den Figuren 1 und 2 nur ein Teil der Arbeitsgerätschaft 12 dargestellt. Die Arbeitsgerätschaft 12 weist einen Lenkertrieb 14 mit einem Lenker 16, der an einer ortsfesten Lagerstelle 18 schwenkbar gelagert ist, und mit einem fluidisch antreibbaren Stellantrieb 20 auf, mittels dem der Lenker 16 ansteuerbar ist. Zum Ansteuern des Stellantriebs 20 weist die Arbeitsgerätschaft 12 des Weiteren eine Druckregelventilanordnung 22 auf, die zumindest einen Ansteuerfluiddruck $p_l$, $p_J$ des Stellantriebs 20 derart regelt, dass die Arbeitsgerätschaft 12 hinsichtlich ihrer Bewegung in Relation zu dem Trägerfahrzeug von dem Trägerfahrzeug entkoppelt ist und vorzugsweise umgekehrt. Die Druckregelventilanordnung 22 bildet damit einen rein fluidischen Regelkreis zur Entkopplung des Trägerfahrzeuges und der Arbeitsgerätschaft 12 voneinander, der einfach im Aufbau ist und eine hohe Dynamik aufweist.

Der Stellantrieb 20 ist als doppeltwirkender Arbeitszylinder 24 ausgebildet. Der Arbeitszylinder 24 ist mit seinem kolbenseitigen Ende 26 an einer weiteren ortsfesten Lagerstelle 28 und mit dem freien Ende 32 seiner Kolbenstange 30 an dem Lenker 16 angelenkt. Der Arbeitszylinder 24 ist in jeder Verfahrstellung seiner Kolbenstangeneinheit 30 derart ausgerichtet, dass das kolbenseitige Ende 26 in Vertikalrichtung gesehen höher als das freie Ende 32 seiner Kolbenstange 30 angeordnet ist. Daher wird der Lenker 16 bei einer Einfahrbewegung der Kolbenstange 30, in Vertikalrichtung gesehen, nach oben, also von einer Bezugsfläche 70 weg und bei einer Ausfahrbewegung nach unten ausgelenkt, also zu der Bezugsfläche 70 hin. Der Arbeitszylinder 24 weist einen stangen- und einen kolbenseitigen Arbeitsraum auf.

Die Druckregelventilanordnung 22 weist ein Druckregelventil V1 auf, das über eine erste Fluidleitung 38 mit dem stangenseitigen Arbeitsraum des Arbeitszylinders 24 fluidführend verbunden ist. Das Druckregelventil V1 ist als 3/2-Wege-Proportional-Druckregelventil V1 ausgebildet. Ein erster Anschluss V1.1 des Druckregelventils V1 ist über die erste Fluidleitung 38 an den stangenseitigen Arbeitsraum des Arbeitszylinders 24 angeschlossen. Ein zweiter V1.2 und dritter V1.3 Anschluss des Druckregelventils V1 sind mit einem Druckversorgungs- P bzw. einem Fluidvorratstankanschluss T der Druckregelventilanordnung 22 fluidführend verbunden. Der Ventilkolben 46 des Druckregelventils V1 ist elektromagnetisch betätigt, von einer in den Figuren 1 und 2 gezeigten ersten Endstellung in eine zweite Endstellung bringbar entgegen der Kraft einer Druckfeder 42 und des an dem ersten Anschluss V1.1 des Druckregelventils V1 vorherrschenden Ansteuerfluiddrucks $p_l$, der über eine Steuerleitung 44 auf eine Steuerseite des Ventilkolbens 46 geführt ist. In der ersten Endstellung des Ventilkolbens 46 des Druckregelventils V1 verbindet der Ventilkolben 46 den ersten Anschluss V1.1 des Druckregelventils V1 über einen Fluidweg mit seinem dritten Anschluss V1.3, wohingegen sein zweiter Anschluss V1.2 getrennt ist. In der zweiten Endstellung des Ventilkolbens 46 verbindet dieser den zweiten Anschluss V1.2 des Druckregelventils V1 über einen weiteren Fluidweg mit seinem ersten Anschluss V1.1, wohingegen sein dritter Anschluss V1.3 getrennt ist. Der rein fluidische Regelkreis zur Entkopplung des Trägerfahrzeuges und der Arbeitsgerätschaft 12 voneinander kann allein durch dieses Druckregelventil V1 gebildet sein.

In die erste Fluidleitung 38 ist als Teil der Druckregelventilanordnung 22 ein Sperrventil V2 geschaltet. Das Sperrventil V2 ist als 2/2-Wege-Schaltventil V2 ausgebildet. Ein erster Anschluss V2.1 des Sperrventils V2 ist mit dem ersten Anschluss V1.1 des Druckregelventils V1 und ein zweiter Anschluss V2.2 des Sperrventils V2 ist mit dem stangenseitigen Arbeitsraum des Arbeitszylinders 24 fluidführend verbunden. Ein Ventilkolben 52 des Sperrventils V2 ist elektromagnetisch betätigt, entgegen der Kraft einer Druckfeder 48 von einer in den Figuren 1 und 2 gezeigten ersten Schaltstellung in eine zweite Schaltstellung bringbar. In der ersten Schaltstellung, die die Sperrstellung darstellt, ist der erste Anschluss V2.1 des Sperrventils V2 mit seinem zweiten Anschluss V2.2 über einen Fluidweg verbunden, in den ein Rückschlagventil 50 geschaltet ist, das entgegen der Kraft einer Druckfeder in Richtung des stangenseitigen Arbeitsraumes des Arbeitszylinders 24 öffnet. In der zweiten Schaltstellung verbindet der Ventilkolben 52 des Sperrventils V2 seinen ersten V2.1 mit seinem zweiten V2.2 Anschluss über einen weiteren Fluidweg.

Als Teil der Druckregelventilanordnung 22 ist ein weiteres Druckregelventil V3 und gegebenenfalls ein weiteres Sperrventil V4 vorgesehen, das jeweils mit dem kolbenseitigen Arbeitsraum des Arbeitszylinders 24 fluidführend verbunden ist und die ansonsten hinsichtlich ihrer Ausgestaltung und Fluidverbindungen dem Druckregel- V1 bzw. Sperrventil V2 entsprechen.

Es ist eine elektronische Regeleinheit 54 (Electronic Control Unit, ECU) vorgesehen, die über eine jeweilige elektrische Leitung 56 eine Magnetbetätigungseinrichtung 58 eines jeweiligen Ventiles V1, V2, V3, V4 ansteuert. Über eine jeweilige weitere elektrische Leitung 60 ist eine Eingabeeinrichtung 62 zum Abgeben von Hebe- und Senkbefehlen durch einen Bediener der Arbeitsmaschine und zumindest eine Sensoreinrichtung 64, 66, 68 zum Erfassen von Zustandswerten $y_B$, $x_P$ des Lenkertriebes 14 an die Regeleinheit 54 angeschlossen. Eine am Lenker 16 angeordnete Sensoreinrichtung in Form eines Bewegungssensors 64 dient zum Erfassen eines Bewegungszustandes des Lenkers 16, wie beispielsweise der Beschleunigung und/oder der Winkelgeschwindigkeit. Diese Sensoreinrichtung 64 kann als Beschleunigungs- und/oder Drehratensensor ausgebildet sein. Bevorzugt ist eine Inertiale Messeinheit (Inertial Measurement Unit, IMU) vorgesehen. Eine am Lenker 16 angeordnete weitere Sensoreinrichtung in Form eines Positionssensors 66 dient zum Erfassen eines Positionszustandes des Lenkers 16, wie beispielsweise des Abstandes und/oder des Winkels in Bezug auf die Bezugsfläche 70, wie vorzugsweise den Boden. Diese Sensoreinrichtung 66 kann als Ultraschall- oder Neigungssensor ausgebildet sein.

Die Sensoreinrichtung 64 und die weitere Sensoreinrichtung 66 können an dem Lenker 16 möglichst weit entfernt von der Lagerstelle 18 des Lenkers 16 angeordnet sein, um möglichst aussagekräftige Messwerte $y_B$, $x_P$ zu erfassen. Optional kann eine in den Figuren nicht gezeigte weitere Sensoreinrichtung zum Erfassen eines Positionszustandes des Lenkers 16 in Form eines Wegesensors zum Erfassen des Verfahrweges der Kolbenstange 30 des Stellantriebs 20 vorgesehen sein.

Ebenfalls optional ist ein Drucksensor 68 vorgesehen, der in der Druckregelventilanordnung 22 oder in dem Arbeitszylinder 24 einen Offset-Fluiddruck $p_0$ zum Ausgleichen eines Eigengewichts der Arbeitsgerätschaft 12 erfasst. Alternativ kann der Offset-Fluiddruck $p_0$, insbesondere in Abhängigkeit einer Position x des Lenkers 16, in der Regeleinheit 54 abgelegt sein.

Das Trägerfahrzeug kann selbst einen Fahrantrieb aufweisen oder als zu ziehender Anhänger ausgebildet sein. Bei einem Trägerfahrzeug mit Fahrantrieb kann es sich um eine landwirtschaftliche Maschine, wie beispielsweise einen Traktor, handeln. Die Arbeitsgerätschaft 12 kann von dem Trägerfahrzeug abnehmbar sein und/oder ausgebildet sein als Mähwerk, Häcksler, Rodeaggregat, Frontkraftheber, Schneidwerk oder Höhenführung.

In Fig. 1 ist der Lenker 16 als Schwinge ausgebildet und weist nur ein, insbesondere balkenförmiges, Glied 72 auf. Das Glied 72 ist an seinem einen Ende mit der Lagerstelle 18 und in seinem Mittenbereich mit dem freien Ende 32 der Kolbenstange 30 des Stellantriebs 20 schwenkbar verbunden. In Fig. 2 ist der Lenker 16 als Viergelenkkette bzw. Parallelführung ausgebildet und weist drei, insbesondere balkenförmige, Glieder 74, 76, 78 auf. Ein erstes 74 und ein zweites 76 Glied gleicher Länge, die jederzeit parallel zueinander ausgerichtet und voneinander beabstandet sind, sind jeweils mit ihrem einen Ende mit einer weiteren Lagerstelle 18 schwenkbar verbunden. Das dritte Glied 78 ist jederzeit vertikal ausgerichtet und mit seinem einen und anderen Ende mit dem anderen Ende des ersten 74 bzw. zweiten 76 Gliedes schwenkbar verbunden. Jede der schwenkbaren Verbindungen bildet ein Gelenk.

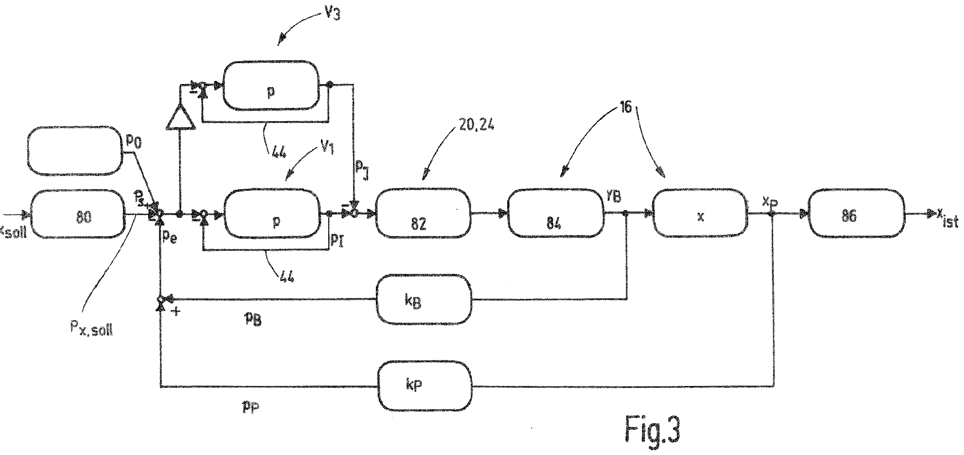

In Fig. 3 ist der Ablauf der Regelung der Druckregelventilanordnung 22 dargestellt. Mittels der Eingabeeinrichtung 62 wird von einem Bediener der Arbeitsmaschine eine Soll-Position $x_{soll}$ vorgegeben. Durch Skalierung 80 wird aus der Soll-Position $x_{soll}$ ein Fluiddruck $p_{x,soll}$ ermittelt. Auf den Fluiddruck $p_{x,soll}$ wird ein Offset-Fluiddruck $p_0$ addiert zwecks eines Ausgleichens eines Eigengewichts der Arbeitsgerätschaft 12, wodurch sich ein Soll-Fluiddruck ergibt. In Abhängigkeit des Soll-Fluiddrucks wird eine Regelabweichung $p_e$ ermittelt. Die Werte der Regelabweichung $p_e$ werden mittels einer in der Regeleinheit 54 abgelegten Umsetzungs- bzw. Umrechnungstabelle (LookupTable) in Ansteuersignalwerte zur Ansteuerung der Druckregelventilanordnung 22 umgesetzt. Bei dem jeweiligen Ansteuersignal kann es sich um ein Stromsignal handeln. Mittels der Ansteuersignalwerte wird das eine Druckregelventil V1 und gegebenenfalls das weitere Druckregelventil V3 angesteuert, von denen das Druckregelventil V1 den stangenseitigen Arbeitsraum des Arbeitszylinders 24 mit dem Ansteuerfluiddruck $p_I$ und gegebenenfalls weitere Druckregelventil V3 den kolbenseitigen Arbeitsraum mit einem Ansteuerfluiddruck $p_J$ beaufschlagt.

Auf die eine Seite des Ventilkolbens 46 des jeweiligen Druckregelventils V1, V3 wirkt die Kraft des Ansteuerfluiddrucks $p_I, p_J$ des jeweiligen Arbeitsraumes des Arbeitszylinders 24, der, vorzugsweise innerhalb des Ventils V1, V3, dort hingeführt ist, was einer Rückführung des Entkopplungsregelkreises entspricht. Mittels dieses Regelkreises lassen sich das Trägerfahrzeug und die Arbeitsgerätschaft 12 hinsichtlich störender Einflüsse auf deren jeweilige Bewegung voneinander entkoppeln.

Aufgrund des jeweiligen Ansteuerfluiddrucks $p_I, p_J$ erfährt ein in den Figuren nicht dargestellter Kolben des Arbeitszylinders 24 eine Kraft, die den Kolben entweder im Wesentlichen ortsfest hält oder die Kolbenstange 30 zum Aus- oder Einfahren bewegt. So verbleibt die Arbeitsgerätschaft 12 basierend auf der fluidischen Druckregelung mittels des jeweiligen Druckregelventils V1, V3 in jedem Fall unbeeinflusst von beispielsweise einer Nick- und/oder Wankbewegung des Trägerfahrzeuges.

Bei Vorsehen lediglich eines einzigen Druckregelventils V1 und gegebenenfalls eines einzigen Sperrventils V2 wird nur der stangenseitige Arbeitsraum des Arbeitszylinders 24 mit einem Fluiddruck $p_I$ beaufschlagt, der von dem Offset-Fluiddruck $p_0$ abhängt. Soll der Kolben des Arbeitszylinders 24 beispielsweise unbewegt in einer Ausgangs- bzw. Ruheposition gehalten werden, kann der Fluiddruck $p_I$ im stangenseitigen Arbeitsraum des Arbeitszylinders 24 dem Offset-Fluiddruck $p_0$ entsprechen. Der kolbenseitige Arbeitsraum des Arbeitszylinders 24 kann dabei unmittelbar mit einem Tankanschluss T verbunden sein. Für Verfahrbewegungen des Kolbens wird der Fluiddruck $p_I$ in dem stangenseitigen Arbeitsraum entsprechend erhöht oder verringert. Mittels der Druckregelventilanordnung 22, die zumindest zwei Druckregelventile V1, V3 aufweist, die, wie in Fig. 1 und 2 gezeigt, jeweils an einen Arbeitsraum des Arbeitszylinders 24 angeschlossen sind, ist der Arbeitszylinder 24 doppeltwirkend ausbildbar, so dass der Kolben des Arbeitszylinders 24 beidseitig fluiddruckbeaufschlagt einspannbar ist. Dafür wird der stangen- und kolbenseitige Arbeitsraum des Arbeitszylinders 24 jeweils mit einem Fluiddruck $p_I, p_J$ beaufschlagt, der von dem Offset-Fluiddruck $p_0$ abhängt. Aufgrund des Flächenverhältnisses des Kolbens unterscheiden sich die Fluiddrücke $p_I, p_J$ in den beiden Arbeitsräumen zumindest in einem unbewegten Zustand des Kolbens voneinander. In einer Ausgangs- bzw. Ruheposition des Kolbens kann der Fluiddruck $p_I$ im stangenseitigen Arbeitsraum dem Offset-Fluiddruck $p_0$ entsprechen und der Fluiddruck $p_J$ im kolbenseitigen Arbeitsraum demgegenüber um das Flächenverhältnis des Kolbens verringert sein. Für eine Bewegung des Kolbens wird in Abhängigkeit des Offset-Fluiddrucks $p_0$ und der gewünschten Verfahrbewegung des Kolbens der Fluiddruck $p_I, p_J$ in einem Arbeitsraum derart erhöht und gleichzeitig der andere Fluiddruck $p_J, p_I$ in dem anderen Arbeitsraum entsprechend derart verringert, dass der Kolben während seiner Verfahrbewegung beidseitig fluiddruckbeaufschlagt eingespannt verbleibt.

Wird die Kolbenstange 30 des Arbeitszylinders 24 durch den Ansteuerfluiddruck $p_I$ aus- oder eingefahren, bringt die Kolbenstange 30 eine Kraft 82 auf den Lenker 16 auf, wodurch der Lenker 16 eine Schwenkbewegung 84 um die Lagerstelle 18 ausführt. Dabei werden mittels des Bewegungssensors 64 absolute Bewegungszustandswerte $y_B$, wie beispielsweise Beschleunigungs- und/oder Winkelgeschwindigkeitswerte, des Lenkers 16 erfasst. Darauffolgend wird eine Verstärkung $k_B$ der Bewegungszustandswerte $y_B$ durchgeführt. Die verstärkten Bewegungszustandswerte $p_B$ werden dann zum Erhalt der Regelabweichung $p_e$ von dem Soll-Fluiddruck subtrahiert. Mittels dieses Regelkreises lässt sich eine Dämpfung der Bewegung des Lenkers 16 verwirklichen, wodurch eine Stabilisierung der Bewegung des Lenkers 16 realisierbar ist.

Der Lenker 16 ist zu jedem Zeitpunkt in einer veränderbaren Position x angeordnet, wobei mittels des Positionssensors 66 absolute Positionszustandswerte $x_P$, wie beispielsweise der Abstand oder der Winkel des Lenkers 16 bezüglich der Bezugsfläche 70, erfassbar sind. Darauffolgend wird eine Verstärkung $k_P$ der Positionszustandswerte $x_P$ durchgeführt. Die verstärkten Positionszustandswerte $p_P$ werden dann zum Erhalt der Regelabweichung $p_e$ von dem Soll-Fluiddruck subtrahiert. Mittels dieses Regelkreises lässt sich eine Positionierung des Lenkers 16 verwirklichen.

In einem letzten Schritt kann aus den Positionszustandswerten $x_P$ durch Skalierung 86 die Ist-Position $x_{ist}$ ermittelt werden.

Zusammenfassend lässt sich für die Regeleinheit folgende Regelabweichung $p_e$ formulieren:

$$p_e = p_0 + p_{x,soll} - y_B \cdot k_B - x_P \cdot k_P$$

Dabei steht $p_0$ für den Offset-Fluiddruck, $p_{x,soll}$ für den ermittelten Fluiddruck, $y_B$ für die Bewegungszustandsmesswerte und $k_B$ für deren Verstärkungskonstante sowie $x_P$ für die Positionszustandsmesswerte und $k_P$ für deren Verstärkungskonstante.

**Patentansprüche**

1. Fahrbare Arbeitsmaschine mit einem Trägerfahrzeug und einer Arbeitsgerätschaft (12), die zumindest besteht aus einem Lenkertrieb (14) mit mindestens einem an einer Lagerstelle (18) schwenkbar gelagerten Lenker (16) und einem fluidisch antreibbaren Stellantrieb (20) zum Ansteuern des jeweiligen Lenkers (16), **dadurch gekennzeichnet, dass** eine Druckregelventilanordnung (22) vorgesehen ist, die zumindest einen Ansteuerfluiddruck ($p_I, p_J$) des Stellantriebs (20) derart regelt, dass die Arbeitsgerätschaft (12) hinsichtlich ihrer Bewegung in Relation zu dem Trägerfahrzeug von dem Trägerfahrzeug entkoppelt ist.

2. Arbeitsmaschine nach Anspruch 1, **dadurch gekennzeichnet, dass** mindestens eine Sensoreinrichtung in Form eines Drehratensensors (64) zum Erfassen von absoluten Winkelgeschwindigkeitswerten ($y_B$) des Lenkers (16) vorgesehen ist.

3. Arbeitsmaschine nach Anspruch 1 oder 2, **dadurch gekennzeichnet, dass** eine inertiale Messeinheit - Inertial Measurement Unit - vorgesehen ist, die Sensoreinrichtungen in Form von drei senkrecht zueinander ausgerichteten Drehratensensoren (64) zum Erfassen von absoluten Winkelgeschwindigkeitswerten ($y_B$) des Lenkers (16) und drei senkrecht zueinander ausgerichteten Beschleunigungssensoren (64) zum Erfassen von absoluten Beschleunigungswerten ($y_B$) des Lenkers (16) aufweist.

4. Arbeitsmaschine nach einem der voranstehenden Ansprüche, **dadurch gekennzeichnet, dass** die Druckregelventilanordnung (22) zumindest ein Druckregelventil (V1, V3) zur Regelung des jeweiligen Ansteuerfluiddrucks ($p_I, p_J$) aufweist, das jeweils zumindest mit einem Arbeitsraum des Stellantriebs (20) fluidführend verbunden ist.

5. Arbeitsmaschine nach einem der voranstehenden Ansprüche, **dadurch gekennzeichnet, dass** eine Regeleinheit (54) zum Verarbeiten der Sensorwerte vorgesehen ist und dass zumindest das jeweilige Druckregelventil (V1, V3) von der Regeleinheit (54) ansteuerbar ist.

6. Arbeitsmaschine nach einem der voranstehenden Ansprüche, **dadurch gekennzeichnet, dass** das jeweilige Druckregelventil (V1, V3) zumindest entgegen einer Kraft des jeweiligen Ansteuerfluiddrucks ($p_I$, $p_J$) elektromagnetisch betätigbar ist.

7. Arbeitsmaschine nach einem der voranstehenden Ansprüche, **dadurch gekennzeichnet, dass** in den jeweiligen Fluidweg (38) zwischen dem jeweiligen Arbeitsraum des Stellantriebs (20) und dem jeweiligen Druckregelventil (V1, V3) ein Sperrventil (V2, V4) geschaltet ist, das vorzugsweise als 2/2-Wege-Schaltventil (V2, V4) ausgebildet ist.

8. Arbeitsmaschine nach einem der voranstehenden Ansprüche, **dadurch gekennzeichnet, dass** das jeweilige Druckregelventil (V1, V3) als 3/2-Wege-Proportional-Druckregelventil (V1, V3) ausgebildet ist.

9. Arbeitsmaschine nach einem der voranstehenden Ansprüche, **dadurch gekennzeichnet, dass** die Regeleinheit (54) und mit dieser verbunden, eine Eingabeeinrichtung (62) zum Abgeben von Befehlen durch einen Bediener der Arbeitsmaschine und vorzugsweise mindestens eine Sensoreinrichtung (64, 66) zum Erfassen von Zustandswerten ($y_B$, $x_P$) des Lenkertriebes (14) vorgesehen sind.

10. Arbeitsmaschine nach einem der voranstehenden Ansprüche, **dadurch gekennzeichnet, dass** ein Offset-Fluiddruck ($p_0$) zum Ausgleichen eines Eigengewichts der Arbeitsgerätschaft (12) in der Regeleinheit (54) vorparametriert ist oder mittels eines an der Regeleinheit (54) angeschlossenen Drucksensors (68) erfassbar ist.

11. Verfahren zum Regeln einer Position zumindest eines Teils einer Arbeitsgerätschaft (12) einer fahrbaren Arbeitsmaschine nach einem der voranstehenden Ansprüche gegenüber einer Bezugsfläche (70), mit folgenden Schritten:

    - Vorgeben einer Soll-Position ($x_{soll}$) der Arbeitsgerätschaft (12) und Ermitteln eines Fluiddrucks ($p_{X,soll}$) in Abhängigkeit der Soll-Position ($x_{soll}$), und
    - Regeln zumindest eines Ansteuerfluiddrucks ($p_I$, $p_J$) des Stellantriebs (20) mittels einer Druckregelventilanordnung (22) zumindest in Abhängigkeit des ermittelten Fluiddrucks ($p_{X,soll}$) derart, dass die Arbeitsgerätschaft (12) hinsichtlich ihrer Bewegung in Relation zu dem Trägerfahrzeug von dem Trägerfahrzeug entkoppelt ist.

12. Verfahren nach Anspruch 11, **dadurch gekennzeichnet, dass** von einer Regeleinheit (54) zumindest in Abhängigkeit des ermittelten Fluiddrucks ($p_{X,soll}$) eine Regelabweichung ($p_e$) ermittelt wird, dass die Druckregelventilanordnung (22) zumindest ein Druckregelventil (V1, V3) aufweist und dass von der Regeleinheit (54) in Abhängigkeit der Regelabweichung ($p_e$) das jeweilige Druckregelventil (V1, V3) angesteuert wird, das mittels des jeweiligen Ansteuerfluiddrucks ($p_I$, $p_J$) einen jeweiligen Arbeitsraum des Stellantriebs (20) ansteuert.

13. Verfahren nach Anspruch 11 oder 12, **dadurch gekennzeichnet, dass** in Abhängigkeit des ermittelten Fluiddrucks ($p_{X,soll}$) und eines Offset-Fluiddrucks ($p_0$) zum Ausgleichen des Eigengewichts der Arbeitsgerätschaft (12) ein Soll-Fluiddruck ermittelt wird, in Abhängigkeit dessen von der Regeleinheit (54) die Regelabweichung ($p_e$) ermittelt wird.

14. Verfahren nach einem der Ansprüche 11 bis 13, **dadurch gekennzeichnet, dass** zur Ansteuerung des jeweiligen Druckregelventils (V1, V3) von der Regeleinheit (54) mittels jeweils einer Umsetzungstabelle Werte der Regelabweichung ($p_e$) in Ansteuersignalwerte umgesetzt werden, mittels denen das jeweilige Druckregelventil (V1, V3) von der Regeleinheit (54) angesteuert wird.

15. Verfahren nach einem der Ansprüche 11 bis 14, **dadurch gekennzeichnet, dass** mittels mindestens einer Sensoreinrichtung (64, 66) Zustandswerte ($y_B$, $x_P$) des Lenkertriebes (14) erfasst werden und dass die Regelabweichung ($p_e$) von der Regeleinheit (54) zumindest in Abhängigkeit der Zustandswerte ($y_B$, $x_P$) ermittelt wird.

Fig.1

Fig.2

Fig.3

Europäisches
Patentamt

European
Patent Office

Office européen
des brevets

**EUROPÄISCHER RECHERCHENBERICHT**

Nummer der Anmeldung

EP 22 17 3566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 259 974 A1 (MACDON IND LTD [CA]) 27. Dezember 2017 (2017-12-27) * Abbildungen 1,2 * * Absätze [[0053]] - [[0058]] * ----- | 1-15 | INV. B62D49/06 F15B11/028 |
| X | EP 3 530 962 A1 (BOSCH GMBH ROBERT [DE]) 28. August 2019 (2019-08-28) * Abbildung 1 * * Absätze [[0019]] - [[0023]] * ----- | 1-15 | |
| A | US 5 704 200 A (CHMIELEWSKI JR THOMAS A [US] ET AL) 6. Januar 1998 (1998-01-06) * Abbildungen 1b, 2a * ----- | 1-15 | |
| A | US 2009/082930 A1 (PETERS OLE [DE]) 26. März 2009 (2009-03-26) * Abbildungen 2,3 * ----- | 1-15 | |
| A | EP 2 591 657 A1 (HORSCH LEEB APPLIC SYSTEMS GMBH [DE]) 15. Mai 2013 (2013-05-15) * Abbildungen * ----- | 1-15 | **RECHERCHIERTE SACHGEBIETE (IPC)** |
| A | US 2014/196996 A1 (ITO TATSUO [JP] ET AL) 17. Juli 2014 (2014-07-17) * Abbildungen 2, 4-7 * ----- | 1-15 | B62D F15D F15B |

Der vorliegende Recherchenbericht wurde für alle Patentansprüche erstellt

| Recherchenort | Abschlußdatum der Recherche | Prüfer |
|---|---|---|
| Den Haag | 5. Oktober 2022 | Thiercelin, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**EP 4 091 922 A1**

## ANHANG ZUM EUROPÄISCHEN RECHERCHENBERICHT
## ÜBER DIE EUROPÄISCHE PATENTANMELDUNG NR.

EP 22 17 3566

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-10-2022

| Im Recherchenbericht angeführtes Patentdokument | Datum der Veröffentlichung | Mitglied(er) der Patentfamilie | Datum der Veröffentlichung |
|---|---|---|---|
| EP 3259974 A1 | 27-12-2017 | AR 108542 A1 | 29-08-2018 |
| | | AU 2017251731 A1 | 18-01-2018 |
| | | BR 102017013443 A2 | 09-01-2018 |
| | | CA 2962674 A1 | 21-12-2017 |
| | | CA 3003019 A1 | 21-12-2017 |
| | | CA 3072086 A1 | 21-12-2017 |
| | | EA 201791123 A1 | 28-02-2018 |
| | | EP 3259974 A1 | 27-12-2017 |
| | | HU E055852 T2 | 28-12-2021 |
| | | US 2017359954 A1 | 21-12-2017 |
| | | US 2017359955 A1 | 21-12-2017 |
| | | WO 2017219130 A1 | 28-12-2017 |
| EP 3530962 A1 | 28-08-2019 | KEINE | |
| US 5704200 A | 06-01-1998 | KEINE | |
| US 2009082930 A1 | 26-03-2009 | AT 533598 T | 15-12-2011 |
| | | DE 102007045846 A1 | 02-04-2009 |
| | | EP 2042276 A2 | 01-04-2009 |
| | | ES 2377675 T3 | 29-03-2012 |
| | | US 2009082930 A1 | 26-03-2009 |
| EP 2591657 A1 | 15-05-2013 | DK 2591657 T3 | 02-10-2017 |
| | | EP 2591657 A1 | 15-05-2013 |
| | | EP 3219187 A1 | 20-09-2017 |
| | | PL 2591657 T3 | 29-12-2017 |
| US 2014196996 A1 | 17-07-2014 | CN 103918633 A | 16-07-2014 |
| | | JP 2014132878 A | 24-07-2014 |
| | | KR 20140091656 A | 22-07-2014 |
| | | US 2014196996 A1 | 17-07-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015067804 A1